## Europäisches Patentamt
## European Patent Office
## Office européen des brevets

(19)

(11) Veröffentlichungsnummer : **0 098 259**
**B1**

(12) # EUROPÄISCHE PATENTSCHRIFT

(45) Veröffentlichungstag der Patentschrift :
**17.08.88**

(51) Int. Cl.⁴ : **H 04 L 5/14**

(21) Anmeldenummer : **83890101.5**

(22) Anmeldetag : **17.06.83**

(54) **Schaltungsanordnung zur Kontrolle der quasisynchronen Übertragung von Daten.**

(30) Priorität : **24.06.82 AT 2459/82**

(43) Veröffentlichungstag der Anmeldung :
**11.01.84 Patentblatt 84/02**

(45) Bekanntmachung des Hinweises auf die Patenterteilung : **17.08.88 Patentblatt 88/33**

(84) Benannte Vertragsstaaten :
**BE CH DE FR GB IT LI NL SE**

(56) Entgegenhaltungen :
**EP-A- 0 033 821**
**FR-A- 2 404 970**
**US-A- 4 007 449**

(73) Patentinhaber : **VOEST-ALPINE Aktiengesellschaft**
**Friedrichstrasse 4**
**A-1011 Wien (AT)**

(72) Erfinder : **Posch, Reinhard Dr.**
**Pachern Hauptstrasse 111**
**A-8042 Graz (AT)**

(74) Vertreter : **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

**Beschreibung**

Die Erfindung betrifft eine Schaltungsanordnung zur Kontrolle der quasisynchronen Übertragung von Daten über eine Datenfernübertragungsleitung, welche Schaltungsanordnung zwischen einer Daten abgebenden oder empfangenden Einheit, beispielsweise einem Rechner oder einem Endgerät, und einem Modem angeordnet ist und einen Prozessor mit einem parallelen Ausgang enthält.

Es wird auf die EP-A2-0098260 hingewiesen mit gleichem Anmelde- sind Prioritätstag.

Aus der EP-A-33 821 ist ein intelligentes Interface für die selbsttätige Handhabung einer Wähl- oder Standleitung, wie einer Telefonleitung, bekannt. Hierbei sind neben einer Gabelschaltung unter anderem ein Umschaltrelais, ein Modem, ein Programmspeicher und ein Speicher mit wahlfreiem Zugriff vorgesehen, welche von einem Prozessor verwaltet werden. Der Speicher mit wahlfreiem Zugriff soll hiebei als Textspeicher und als Rufnummernspeicher zum selbsttätigen Wählen der anzurufenden Gegenstation dienen. Weiters sind neben einem Detektor für Datensignale auch ein Detektor für Amtszeichen und ein Anrufdetektor vorhanden, durch deren Zusammenwirken vor allem der selbsttätige Verbindungsaufbau zu der Gegenstation bewerkstelligt werden soll.

Aus der US-A-4 007 449 ist eine Schaltungsanordnung zur Kontrolle der asynchronen Übertragung von Daten zwischen zwei Stellen bekannt, wobei jeder Übertragung von acht Datenbits ein Startbit vorausgeht und zwei Stoppbits nachfolgen. Auf die beiden Stoppbits eines Datenbytes kann das Startbit eines nachfolgenden Datenbytes unmittelbar oder aber nach einer Pause folgen. Diese Schaltungsanordnung dient dazu, neben der seriellen Fernübertragung von Daten mittels Modems auch lokale Verbindungen zwischen den beiden Stellen ohne Verwendung der Modems in solcher Weise zu ermöglichen, daß dem Steuerbaustein der einen Stelle der Datenübertragungsbaustein der anderen Stelle als Modem erscheint.

Weiters ist es bekannt, bei der Datenübertragung zwischen Datenverarbeitungsanlagen die Prozedurschritte nach einem Programm zu steuern, wobei die jeweilige Datenverarbeitungseinrichtung, die mit einer entfernten Datenverarbeitungsanlage den Datenaustausch durchführt, mitverwendet wird. Dies hat den Nachteil, daß die Datenverarbeitungseinrichtung über ihre eigentliche Aufgabe hinaus mit den für die Datenübertragung erforderlichen Prozedur-Steuerungsaufgaben belastet ist. Man war daher bestrebt, die Datenverarbeitungseinrichtung von allen mit Datenübertragungs-Prozeduren im Zusammenhang stehenden Aufgaben zu entlasten. Zur Abhilfe wurde vorgeschlagen, innerhalb der Datenverarbeitungsanlage, von welcher ein Datenaustausch mit einer entfernten Datenverarbeitungsanlage durchgeführt werden soll, zur Steuerung von Datensende- und -empfangs-Prozeduren zwischen der lokalen Datenverarbeitungseinrichtung und einem eine Datenleitung abschließenden Modem einen Datenübertragungs-Prozessor anzuordnen. Dadurch ist die gewünschte Entlastung der Datenverarbeitungsanlage von der Steuerung und Überwachung der Datenfernübertragung erreicht. Der Datenübertragungs-Prozessor nach dem bekannten Vorschlag ist aber nicht universell anwendbar, weil er in eine Datenverarbeitungsanlage fest einzubauen ist und Daten von der Datenverarbeitungseinrichtung über interne Verbindungen erhält bzw. über diese Verbindungen Daten an die Datenverarbeitungseinrichtung liefert und somit an die Art und Weise, wie die Daten seitens der Datenverarbeitungseinrichtung an diesen Verbindungen vorliegen, angepaßt sein muß. Ferner enthält der bekannte Datenübertragungs-Prozessor zwischen einem eingebauten, als Steuereinrichtung dienenden Mikrorechner und seiner Anschlußstelle zur Verbindung mit dem eine Datenleitung abschließenden Modem einen Synchron/Asynchron-Sender/Empfänger zur Parallel/Seriell- und Seriell/Parallel-Zeichenumsetzung, wobei das Modem über eine serielle Schnittstelle anschließbar ist. Dadurch, daß der als Steuereinrichtung des Datenübertragungs-Prozessors dienende Mikrorechner von der der Datenfernleitung zugewendeten Seite nicht unmittelbar zugänglich ist, wäre eine gegebenenfalls gewünschte Erweiterung der Steuerung der Datenfernübertragung für eine möglichst vollständige und sichere Ausnützung der Datenfernleitung mit Schwierigkeiten verbunden.

Die Erfindung zielt darauf ab, eine Schaltungsanordnung zur quasisynchronen Übertragung von Daten über eine Datenfernübertragungsleitung bei hoher Durchsatzleistung und hoher Sicherheit zu schaffen, wobei mit einem Minimum von Synchronzeichen ausgekommen werden soll. Zur Lösung dieser Aufgabe besteht die Erfindung darin, daß der parallele Ausgang des Prozessors bzw. eines Mikrocomputers Anschlüsse für Signalleitungen des Modems enthält, über welche Signale für den Belegungszustand und/oder die Übertragungsgüte dem Prozessor bzw. Mikrocomputer zugeführt sind, wobei für den Prozessor bzw. Mikrocomputer ein eigener präziser Taktgenerator vorgesehen ist.

Die Erfindung ermöglicht es, asynchrone Geräte und Rechneranschlüsse mit Vollduplexkonzept über einen Halbduplexweg, z. B. eine Telefonleitung, oder eine Übertragungsstrecke, die vorwiegend halbduplex genützt wird, zu verbinden. Sicherheit der Übertragung und optimaler Antwortverzug sind über eine asynchrone Übertragungsstrecke sowohl mit synchronen Modems als auch mit asynchronen Modems erzielbar, wobei im Fall asynchroner Modems anstelle der Einhaltung einer Taktgenauigkeit von 5 % nur eine Abweichung der Taktfrequenz von einem Nennwert um nicht mehr als 0,2 % zugelassen wird, die durch Ableiten des Taktes von einem Quarzoszillator möglich ist. Auf diese Weise ist die Übertragung «asynchroner Teilblöcke» bis zur Größe von 1 kByte einfach möglich.

Die Schaltungsanordnung spricht auf beliebige Inhalte, die zu übertragen sind, mit Ausnahme von zwei Übertragungssteuerungszeichen, an. Die Inhalte werden adaptiv, d. h. nach einem durch ihr zeitliches Eintreffen bestimmten Anordnungsverfahren in einem Block zusammengefaßt und mit Prüfinformation versehen. Zur Wahrung des optimalen Antwortverzuges werden Prüfinformationen zwischengeschaltet, wann immer das zeitliche Eintreffen von echter Information dies zuläßt, und nach dem Standard mit jedem kleineren Teilblock. Bei Fehlern, die aus der Prüfinformation erkennbar sind, werden die Informationen seitens der Sendestation neu formatiert, wobei diese Neuformatierung aufgrund der umgeänderten zeitlichen Situation verschieden zur ursprünglichen Formatierung sein kann.

Die Sicherheit von Kombinationen mit dem optimalen Antwortverzug wird durch das Minimieren des nächsten Prüfzeichenabstandes von aktuellen Zeichen erreicht. Insbesondere werden Sendelücken automatisch für eine Aufgabe des Übertragens von Prüfzeichen herangezogen. Die Initialsynchronisierung wird durch ein Minimum von zwei signifikanten Bits durchgeführt.

Die Blockung bei belasteter Leitung ist demnach eine fixe Teilblocklänge von einem Zeichen, wobei jeder Teilblock mit einem Prüfzeichen abschließt. Ist es aus zeitlichen Gründen nicht möglich, den Teilblock mit Zeichen zu füllen, so wird ein Blockendezeichen eingesteuert und somit das vorzeitige Ende des Teilblockes angezeigt. Dadurch ist es möglich, die Zeichen, die von einem Endgerät kommen, unmittelbar weiterzusenden, ohne auf ein eigenes Startsignal zu warten, wobei ein minimaler Antwortverzug eingehalten wird.

Die üblichen Übertragungskontrollzeichen werden dadurch ersetzt, daß prinzipiell immer übertragen wird und daß jede Lücke für den Wechsel der Übertragungsrichtung herangezogen wird. Darüberhinaus werden an beiden Übertragungsenden identische Bilder der Information aufgebaut, wobei Übertragungssteuerung und Sicherung durch den Austausch eines einfachen Zeigers in diesem Informationsbild, das sich zyklisch gestaltet, möglich sind.

Auf Start- und Endbedingungen des Übertragungsblockes wird verzichtet und es werden diese aus Durchsatzgründen vom Modemsignal «Data Carrier Detect» erkannt und über das Signal «Request to Send» angefordert. Im Falle eines direkten Verbindens ohne Modem wären dementsprechend mindestens vier Signalverbindungen für eine voll funktionsfähige Konfiguration vorzusehen. Dazu kommt noch die Betriebserde.

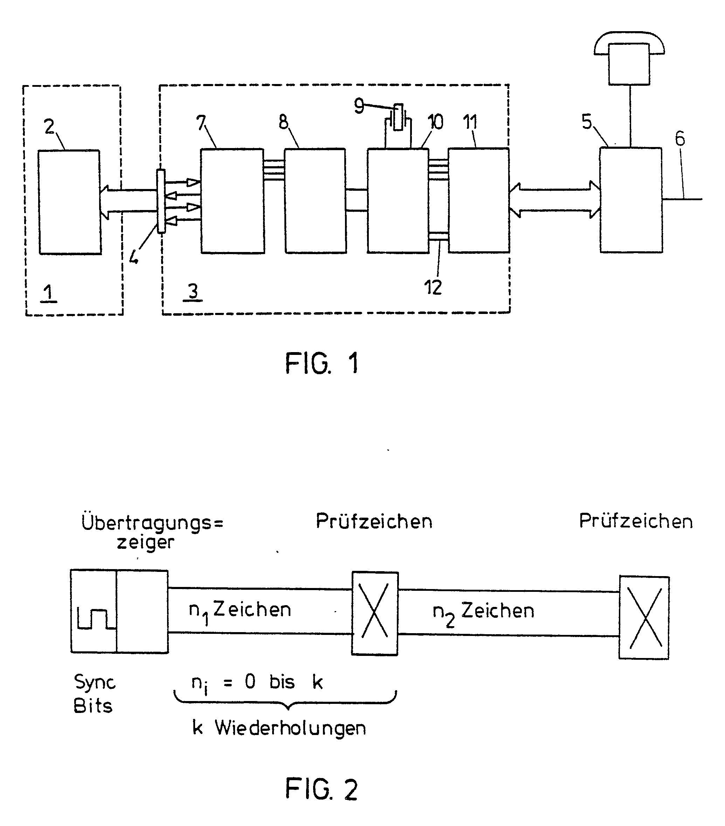

Zweckmäßig sind identische Datenpufferspeicher auf der Sender- und Empfangsseite vorgesehen, welche die zu transportierenden Informationen zunächst aufnehmen und dann je nach den Verhältnissen auf der Datenfernübertragungsleitung weitergeben. Dadurch wird eine Übertragung der Daten in enger Abhängigkeit vom Aufnahmevermögen der Datenfernübertragungsleitung ermöglicht, was besonders dann von Bedeutung ist, wenn diese mehrere Geräte versorgen muß. Die Erfindung wird nachfolgend an Hand der Zeichnung näher erläutert. Es zeigt : Fig. 1 ein bevorzugtes Ausführungsbeispiel einer erfindungsgemäßen Schaltungsanordnung und Fig. 2 ein hierbei anzuwendendes Schema der Signalformatierung.

Mit einem einen Bestandteil einer Datenverarbeitungsanlage 1 bildenden Endgerät 2 steht die in Fig. 1 dargestellte erfindungsgemäße Schaltungsanordnung 3 einerseits über eine Standardschnittstelle 4, z. B. V 24, in Verbindung und ist anderseits mit einem Modem 5 verbunden, an das eine Datenfernübertragungsleitung 6, beispielsweise eine Telefonleitung angeschlossen ist. Die erfindungsgemäße Schaltungsanordnung stellt eine Datenübertragungskontrolleinrichtung dar und enthält zu diesem Zweck anschließend an die serielle Standardschnittstelle 4 zur Pegelanpassung der Signale einen Pegelkonverter 7 und nachfolgend einen Synchron/Asynchron-Sender/Empfänger 8 zur Seriell/Parallel-Zeichenumsetzung der von der Datenverarbeitungsanlage 1 abgehenden Signale bzw. zur Parallel/Seriell-Zeichenumsetzung der ankommenden Signale. Ein wesentlicher Bestandteil dieser erfindungsgemäßen Schaltungsanordnung ist ein einen Taktgeber 9 aufweisender Mikroprozessor 10, dessen Datenbus mit dem Sender/Empfänger 8 verbunden ist. Der Mikroprozessor 10 kann entweder mit einem gesonderten Datenpuffer in Form eines Speichers mit wahlfreiem Zugriff (RAM) und einem gesonderten Programmspeicher in Form eines Festwertspeichers (z. B. EPROM) zusammengeschaltet sein oder es kann an dieser Stelle ein Mikrocomputer verwendet werden, der die zentrale Steuereinheit des Mikroprozessors, den Datenpuffer und den Programmspeicher auf einem einzigen integrierten Schaltkreis enthält.

Für die Erzielung einer guten Anpassungsfähigkeit an die Übertragungsmöglichkeit der Datenfernübertragungsleitung 6 ist es wichtig, daß die Ein- und Ausgänge des Mikroprozessors 10 an der zur Verbindung mit dem die Datenfernübertragungsleitung 6 abschließenden Modem 5 dienenden Anschlußstelle zugänglich sind. Dies wäre bei Vorhandensein eines dem Sender/Empfänger 8 entsprechenden weiteren Sender/Empfängers nicht gewährleistet. Bei dieser Anschlußstelle ist daher lediglich erforderlichenfalls ein Pegelkonverter 11 vorgesehen.

Die Standardschnittstelle 4 zur Verbindung mit der Daten abgebenden oder empfangenden Einheit gestattet ein Zuzammenarbeiten mit beliebigen Rechnern oder Endgeräten und die gute Zugänglichkeit des Mikroprozessors von der dem Modem zugewendeten Anschlußstelle der Schaltungsanordnung 3 über Signalleitungen 12 des Modems 5 ermöglicht eine weitgehende Beeinflussung und Steuerung der Datenübertragung in Abhängigkeit von den Gegebenheiten des Datenanfalls und des Übertragungskanals, was besonders beim Halbduplexverkehr über Telefonleitungen von Bedeutung ist. Hierbei wird vom zentralen Taktgenerator 9 der Schaltungsanordnung 3 ein hochpräziser Übertragungstakt abgeleitet, welcher die quasisynchrone Übertragung auch großer Blocklängen mit minimalem Synchronisierungsaufwand zuläßt.

Die Schaltungsanordnung kann mit einem integrierten Mikrocomputerbaustein 8039, einem EPROM 2716 als Festwertspeicher und einem Asynchron-Sender/Empfänger AY5-1013A aufgebaut sein, wobei die zentrale Taktfrequenz 10MHz beträgt. Der Baustein AY5-1013A erlaubt eine maximale serielle Datenrate von 40 kHz jedoch hängt die tatsächlich anwendbare Übertragungsgeschwindigkeit von den Gegebenheiten des Übertragungsweges ab. Sie beträgt auf einer Telefonleitung 2400 Bd und liegt dabei doppelt so hoch wie am Übertragungslink, kann aber durch das Zusammenfassen gleicher unmittelbar hintereinander liegender Zeichen im Schema «$Z_F$» «Zeichen» «Anzahl» sinnvoll genutzt werden. Dabei ist $Z_F$ das sonst nicht übertragbare Zeichen mit dem Code 02 und die Anzahl eine Zahl größer als oder gleich 3. Bis zu dieser Wiederholungszahl wird sinnvollerweise nicht zusammengefaßt. Diese Zusammenfassung von Zeichen geschieht unabhängig von der tatsächlichen Übertragung, wird aber wegen der asynchronen Schnittstelle zum Terminal nur so lange durchgeführt, bis es aus zeitlichen Bedingungen der Übertragung möglich ist, die identischen Zeichen selbst oder die Folge «$Z_F$» «Zeichen» «Anzahl» zu übertragen. Sobald es möglich ist, das Zeichen $Z_F$ aus dieser Zeichenfolge zu übertragen, wird die momentane Zusammenfassung abgeschlossen und es wird, sobald wieder identische Zeichen auftreten, eine neue derartige Zeichenfolge begonnen. Um die Speicherbelastung in der gegenständlichen Schaltungsanordnung «Protokollmodul» zu minimieren, wird dieses Zusammenfassen bereits beim Empfangen von der lokalen Seite (Endgerät oder Port) durchgeführt. Dadurch ist gesichert, daß kein Verzug bei der Übertragung entstehen kann.

Die entstehende Signalformatierung ist in Fig. 2 dargestellt.

Durch Anwendung eines hochpräzisen Taktes wird eine quasisynchrone Übertragung variabler, auch großer Blocklänge mit 1-Bit-Synchronisierung über asynchrone Modems ermöglicht.

Weiters gestattet die erfindungsgemäße Schaltungsanordnung ein adaptives Zusammenfassen von Informationen zu Blöcken oder Teilblöcken zum Zwecke der gesicherten Übertragung je nach dem zeitlichen Eintreffen in einer im Modem integrierten oder an das Modem angeschalteten Protokolleinheit mit dem Ziel der Optimierung des Antwortverzuges.

Schließlich erlaubt die erfindungsgemäße Schaltungsanordnung ein adaptives Textkomprimieren auf der Basis des Zusammenfassens identischer Zeichen nach dem zeitlichen Eintreffen und der zeitlichen Möglichkeit, diesen Text weiter

zu übertragen.

**Patentanspruch**

Schaltungsanordnung (3) zur Kontrolle der quasisynchronen Übertragung von Daten über eine Datenfernübertragungsleitung (6), welche Schaltungsanordnung zwischen einer Daten abgebenden oder empfangenden Einheit, beispielsweise einem Rechner oder einem Endgerät (2), und einem Modem (5) angeordnet ist und einen Prozessor (10) mit einem parallelen Ausgang enthält, dadurch gekennzeichnet, daß der parallele Ausgang des Prozessors (10) bzw. eines Mikrocomputers Anschlüsse für Signalleitungen (12) des Modems (5) enthält, über welche Signale für den Belegungszustand und/oder die Übertragungsgüte dem Prozessor (10) bzw. Mikrocomputer zugeführt sind, wobei für den Prozessor (10) bzw. Mikrocomputer ein eigener präziser Taktgenerator (9) vorgesehen ist.

**Claim**

Circuit arrangement (3) for controlling the quasi-synchronous transmission of data via a remote data transmission line (6), which circuit arrangement is arranged between a unit emitting or receiving data, for example a computer or a terminal (2), and a modem (5), and contains a processor (10) having a parallel output, characterized in that the parallel output of the processor (10) or of a microcomputer contains connections for signal lines (12) of the modem (5), via which signals for the state of occupancy and/or the transmission quality are supplied to the processor (10) or microcomputer, a separate accurate clock generator (9) being provided for the processor (10) or microcomputer.

**Revendication**

Montage (3) pour contrôler la transmission quasisynchrone de données par l'intermédiaire d'une ligne (6) de transmission de données, ce montage étant disposé entre une unité émettant ou recevant des données, par exemple un ordinateur ou un appareil terminal (2), et un modem (5), et contenant un processeur (10) avec une sortie en parallèle, caractérisé en ce que la sortie en parallèle du processeur (10) ou d'un micro-ordinateur contient des bornes prévues pour les lignes (12) de transmission de signaux du modem (5) et par l'intermédiaire desquelles des signaux relatifs à l'état d'occupation et/ou à la qualité de transmission sont envoyés au processeur (10) ou au micro-ordinateur, un générateur précis particulier de cadence (9) étant prévu pour le processeur (10) ou le micro-ordinateur.

FIG. 1

Übertragungs=
zeiger

Prüfzeichen

Prüfzeichen

$n_1$ Zeichen

$n_2$ Zeichen

Sync
Bits

$n_i$ = 0 bis k

k Wiederholungen

FIG. 2